# EUROPEAN PATENT SPECIFICATION

(11) **EP 1 392 436 B1**
(45) Date of publication and mention of the grant of the patent: **12.04.2006**
(21) Application number: 02763202.5
(22) Date of filing: 04.06.2002
(51) Int. Cl.: B01L 3/00, G01N 15/14

(54) **MICROFLUIDIC FRACTION COLLECTORS**
MIKROFLUIDFRAKTIONSSAMMLER
COLLECTEURS DE FRACTIONS MICROFLUIDIQUES

(30) Priority: 07.06.2001 US 296897 P; 16.05.2002 US 147948
(43) Date of publication of application: 03.03.2004
(73) Proprietor: Nanostream, Inc., Pasadena, CA 91107 (US)
(72) Inventor: O'CONNOR, Stephen, D., Pasadena, CA 91104 (US); PEZZUTO, Marci, Altadena, CA 91101 (US)
(74) Representative: Viering, Jentschura & Partner
(86) International application number: PCT/US2002/017721
(87) International publication number: WO 2003/008101

(56) References cited:
- WO-A-00/12903
- WO-A-96/15576
- WO-A-99/61888
- US-B1- 6 221 654

## Description

### Field Of The Invention

The present invention relates to microfluidic devices for fractionating fluid streams, such as sample streams following separation processes.

### Background Of The Invention

There has been a growing interest in the manufacture and use of microfluidic systems for the acquisition of chemical and biological information. In particular, when conducted in microfluidic volumes, complicated biochemical reactions may be carried out using very small volumes of liquid. Among other benefits, microfluidic systems improve the response time of reactions, minimize sample volume, and lower reagent consumption. When volatile or hazardous materials are used or generated, performing reactions in microfluidic volumes also enhances safety and reduces disposal quantities.

Traditionally, microfluidic devices have been constructed in a planar fashion using techniques that are borrowed from the silicon fabrication industry. Representative systems are described, for example, in some early work by Manz *et al.* (Trends in Anal. Chem. (1990) 10(5): 144-149; Advances in Chromatography (1993) 33: 1-66). In these publications, microfluidic devices are constructed by using photolithography to define channels on silicon or glass substrates and etching techniques to remove material from the substrate to form the channels (WO 9615576). A cover plate is bonded to the top of the device to provide closure. Miniature pumps and valves can also be constructed to be integral (e.g., within) such devices. Alternatively, separate or off-line pumping mechanisms are contemplated.

More recently, a number of methods have been developed that allow microfluidic devices to be constructed from plastic, silicone or other polymeric materials. In one such method, a negative mold is first constructed, and plastic or silicone is then poured into or over the mold. The mold can be constructed using a silicon wafer (see, e.g., Duffy *et al.,* Analytical Chemistry (1998) 70: 4974-4984; McCormick *et.al*., Analytical Chemistry (1997) 69: 2626 -2630), or by building a traditional injection molding cavity for plastic devices. Some molding facilities have developed techniques to construct extremely small molds. Components constructed using a LIGA technique have been developed at the Karolsruhe Nuclear Research center in Germany (see, e.g., Schomburg *et al.,* Journal of Micromechanical Microengineering (1994) 4: 186-191), and commercialized by MicroParts (Dortmund, Germany). Jenoptik (Jena, Germany) also uses LIGA and a hot-embossing technique. Imprinting methods in PMMA have also been demonstrated (see, Martynova *et.al.,* Analytical Chemistry (1997) 69: 4783-4789) However, these techniques do not lend themselves to rapid prototyping and manufacturing flexibility. Additionally, the foregoing references teach only the preparation of planar microfluidic structures. Moreover, the tool-up costs for both of these techniques are quite high and can be cost-prohibitive.

Various conventional tools and combinations of tools are used for separations and detections when performing analyses in conventional macroscopic volumes. Such tools include, for example: filters, metering devices, columns, valves, sample injectors, heaters, coolers, mixers, splitters, diverters, and electrodes (such as are used to induce electrokinetic flow and to perform electrophoretic separations). Performing liquid chromatography in microfluidic volumes provides significant advantages by reducing column packing materials, analytical and biological reagents, solvents, and waste. Small analyte requirements of microfluidic analytical devices are compatible with other microscale processes, such as organic synthesis. Microfluidic devices may also be made to be disposable.

Attempts to conduct separations or detections in microfluidic volumes have been stifled by difficulties such as making such tools in microfluidic scale and then integrating such tools into microfluidic devices. Additionally, difficulties in rapidly prototyping microfluidic devices are compounded by attempts to incorporate multiple analytical tools. Particular difficulty has been encountered in providing microfluidic devices for isolating capable of analysis the species separated by a microfluidic separation device, such as a liquid chromatography column or channel. Some systems have been proposed which divert into an analytical instrument the entire microfluidic stream exiting the separation device (the "separated sample stream"). Such an approach is suitable for analytical devices that perform rapid, real-time analyses on transient or evanescent separated sample streams, such as mass spectrometers. Other analytical devices, however, such as nuclear magnetic resonance (NMR) devices, require substantially quiescent, discrete samples of each of the species to be analyzed.

There exist macrofluidic fraction collectors capable of providing discrete quiescent samples to a well plate or other analytical platform. Such devices, however, may not be suitable for handling the very small volumes of fluid produced as output by other microfluidic devices.

Moreover, as a result of the very small dimensions of microfluidic structures, fluids moving through such structures are characterized by very low Reynolds Numbers (corresponding to laminar flow) and flow dynamics that are heavily affected, if not dominated, by surface interactions. Thus, fluids in microfluidic structures often exhibit surprising and unexpected properties. For example, when fluids traveling through a microfluidic structure encounter a symmetrical-looking split or fork in a channel, the fluid may flow through only one fork or only the other - not splitting evenly between the two, as would be expected in macrofluidic fluid systems. Alternatively, the flow may split, but not evenly. As a consequence of this behavior, it may be difficult to consistently and accurately divert selected portions of separated sample streams (i.e., fractionate the output stream) using microfluidic devices, simply because it may be difficult to predict where in a multipath microfluidic structure a given fluid will flow.

Also, another advantage of microfluidic devices is the ability to miniaturize fluidic tools and, thus, perform multiple experiments in parallel on a single device. This approach may exacerbate the difficulty in fractionating the separated sample streams noted above. This additional difficulty arises because of the need to provide fractions from multiple streams simultaneously to, for example, a well plate to be used by an analytical device. In such cases, the difficulty in predicting the behavior of one fluid flow path within the structure may be multiplied by the number of wells in the well plate to which sample fractions must be delivered.

Thus, it would be desirable to provide a microfluidic fraction collector that is capable of reliably and accurately fractionating a separated sample stream into discrete sample volumes. It also would be desirable to provide a microfluidic fraction collector that is capable of reliably and accurately fractionating multiple separated sample streams simultaneously into discrete sample volumes.

### Summary Of The Invention

In one aspect of the present invention, a microfluidic device for sequentially collecting discrete fractions from a fluid stream comprises a microfluidic inlet channel, a plurality of microfluidic branch channels, and a plurality of impedance regions. Each branch channel of the plurality of microfluidic branch channels is capable of fluid communication with the microfluidic inlet channel. The impedance regions are disposed in series in the microfluidic inlet channel. Each impedance region of the plurality of impedance regions is positioned at a junction between the inlet channel and a branch channel of the plurality of microfluidic branch channels. The device further comprises a plurality of device layers including at least one stencil layer.

In another aspect of the invention, the microfluidic device is incorporated in a microfluidic system for sequentially collecting discrete fractions from a fluid stream that comprises the microfluidic device and a controller in communication with the plurality of impedance regions.

In another aspect of the invention, any of the foregoing aspects are combined for additional advantage. These and other aspects of the invention are provided hereinafter.

### Brief Description Of The Drawings

FIG. 1A is an exploded perspective view of a microfluidic fraction collector in according to one embodiment of the present invention. FIG. 1B is a top view of the assembled device of FIG. 1A.
FIG. 2A is schematic diagram of a microfluidic fraction collection system in according to another embodiment of the present invention. FIG. 2B is schematic diagram of an alternate embodiment of the microfluidic fraction collector of FIG. 2A.
FIG. 3A is a block diagram illustrating the operation of an analytical system capable of providing separation and fraction microfluidic fraction collection utility according to another embodiment of the invention. FIG. 3B is a top view of a portion of a microfluidic device capable of performing selected functions of the system of FIG. 3A. FIG. 3C is a perspective view of a portion of the microfluidic system of FIG. 3A, including the device portion of FIG. 3B.

### Detailed Description Of Preferred Embodiments

### Definitions

The terms "channel" or "chamber" as used herein are to be interpreted in a broad sense. Thus, they are not intended to be restricted to elongated configurations where the transverse or longitudinal dimension greatly exceeds the diameter or cross-sectional dimension. Rather, such terms are meant to comprise cavities or tunnels of any desired shape or configuration through which liquids may be directed. Such a fluid cavity may, for example, comprise a flow-through cell where fluid is to be continually passed or, alternatively, a chamber for holding a specified, discrete ratio of fluid for a specified ratio of time. "Channels" and "chambers" may be filled or may contain internal structures comprising, for example, valves, filters, and similar or equivalent components and materials.

The term "microfluidic" as used herein is to be understood, without any restriction thereto, to refer to structures or devices through which fluid(s) are capable of being passed or directed, wherein one or more of the dimensions is less than five hundred microns.

The term "separated sample stream" as used herein refers to a fluid stream that has undergone a separation process intended to separate or "stagger" individual species within the fluid stream. Thus, a separated sample stream is a continuous fluid stream containing bands of individual species.

The term "stencil" as used herein refers to a material layer or sheet that is preferably substantially planar, through which one or more variously shaped and oriented channels have been cut or otherwise removed through the entire thickness of the layer, thus permitting substantial fluid movement within the layer (as opposed to simple through-holes for transmitting fluid through one layer to another layer). The outlines of the cut or otherwise removed portions form the lateral boundaries of microstructures that are completed when a stencil is sandwiched between other layers, such as substrates and/or other stencils. Stencil layers also can be flexible, thus permitting one or more layers to be manipulated so as not to lie in a plane.

### Microfluidic devices generally

In an especially preferred embodiment, microfluidic devices according to the present invention are constructed using stencil layers or sheets to define channels and/or chambers. As noted previously, a stencil layer is preferably substantially planar and has a channel or chamber cut through the entire thickness of the layer to permit substantial fluid movement within that layer. Various means may be used to define such channels or chambers in stencil layers. For example, a computer-controlled plotter modified to accept a cutting blade may be used to cut various patterns through a material layer. Such a blade may be used either to cut sections to be detached and removed from the stencil layer, or to fashion slits that separate regions in the stencil layer without removing any material. Alternatively, a computer-controlled laser cutter may be used to cut portions through a material layer. While laser cutting may be used to yield precisely dimensioned microstructures, the use of a laser to cut a stencil layer inherently involves the removal of some material. Further examples of methods that may be employed to form stencil layers include conventional stamping or die-cutting technologies, including rotary cutters and other high throughput auto-aligning equipment (sometimes referred to as converters). The above-mentioned methods for cutting through a stencil layer or sheet permits robust devices to be fabricated quickly and inexpensively compared to conventional surface micromachining or material deposition techniques that are conventionally employed to produce microfluidic devices.

After a portion of a stencil layer is cut or removed, the outlines of the cut or otherwise removed portions form the lateral boundaries of microstructures that are completed upon sandwiching a stencil between substrates and/or other stencils. The thickness or height of the microstructures such as channels or chambers can be varied by altering the thickness of the stencil layer, or by using multiple substantially identical stencil layers stacked on top of one another. When assembled in a microfluidic device, the top and bottom surfaces of stencil layers are intended to mate with one or more adjacent layers (such as stencil layers or substrate layers) to form a substantially enclosed device, typically having at least one inlet port and at least one outlet port.

A wide variety of materials may be used to fabricate microfluidic devices using sandwiched stencil layers, including polymeric, metallic, and/or composite materials, to name a few. In certain embodiments, particularly preferable materials include those characterized by substantial optical transmissivity to permit viewing and/or electromagnetic analysis of fluid contents within a microfluidic device. Various preferred embodiments utilize porous materials including filter materials. Substrates and stencils may be substantially rigid or flexible. Selection of particular materials for a desired application depends on numerous factors including: the types, concentrations, and residence times of substances (e.g., solvents, reactants, and products) present in regions of a device; temperature; pressure; pH; presence or absence of gases; and optical properties.

Various means may be used to seal or bond layers of a device together. For example, adhesives may be used. In one embodiment, one or more layers of a device may be fabricated from single- or double-sided adhesive tape, although other methods of adhering stencil layers may be used. A portion of the tape (of the desired shape and dimensions) can be cut and removed to form channels, chambers, and/or apertures. A tape stencil can then be placed on a supporting substrate with an appropriate cover layer, between layers of tape, or between layers of other materials. In one embodiment, stencil layers can be stacked on each other. In this embodiment, the thickness or height of the channels within a particular stencil layer can be varied by varying the thickness of the stencil layer (e.g., the tape carrier and the adhesive material thereon) or by using multiple substantially identical stencil layers stacked on top of one another. Various types of tape may be used with such an embodiment. Suitable tape carrier materials include but are not limited to polyesters, polycarbonates, polytetrafluoroethlyenes, polypropylenes, and polyimides. Such tapes may have various methods of curing, including curing by pressure, temperature, or chemical or optical interaction. The thickness of these carrier materials and adhesives may be varied.

Notably, stencil-based fabrication methods enable very rapid fabrication of devices, both for prototyping and for high-volume production. Rapid prototyping is invaluable for trying and optimizing new device designs, since designs may be quickly implemented, tested, and (if necessary) modified and further tested to achieve a desired result. The ability to prototype devices quickly with stencil fabrication methods also permits many different variants of a particular design to be tested and evaluated concurrently.

Further embodiments may be fabricated from various materials using well-known techniques such as embossing, stamping, molding, and soft lithography.

In addition to the use of adhesives and the adhesiveless bonding method discussed above, other techniques may be used to attach one or more of the various layers of microfluidic devices useful with the present invention, as would be recognized by one of ordinary skill in attaching materials. For example, attachment techniques including thermal, chemical, or light-activated bonding steps; mechanical attachment (such as using clamps or screws to apply pressure to the layers); and/or other equivalent coupling methods may be used.

### Preferred embodiments

In one aspect of the invention, a microfluidic fraction collector is provided. The fraction collector permits a fluid stream to be segregated into discrete portions, each of which may be separately analyzed.

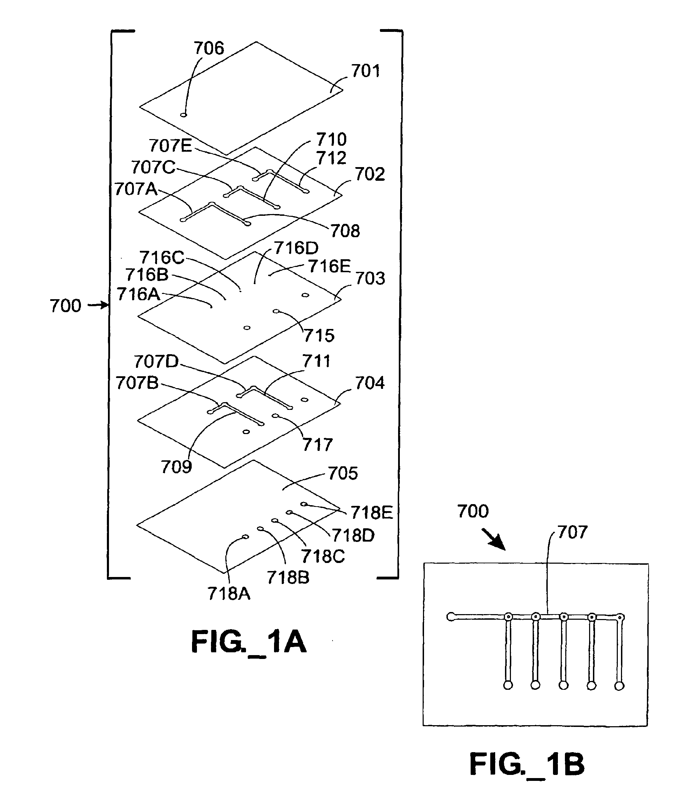

In a preferred embodiment, a microfluidic fraction collector is formed in multiple layers. Referring to FIGS. 1A-1B, five-layer microfluidic fraction collecting device 700 is illustrated. The first device layer 701 is preferably a substrate and defines an inlet aperture 706 for admitting a sample; the second device layer 702 is preferably constructed with a double-sided tape material and defines a first inlet channel portion 707A connected to a first branch channel 708, and defines third and fifth branch channels 710, 712 and third and fifth inlet channel portions 707C, 707E; the third device layer 703 is preferably constructed with a film material and defines three outlet apertures 715 for the branch channels 708, 710, 712 and five impedance regions 716A-716E intended to restrict fluid flow between the second and fourth device layers 702, 704; the fourth device layer 704 is preferably constructed with a double-sided tape material and defines second and fourth branch channels 709, 711, second and fourth inlet channel portions 707B, 707D, and peripheral vias 717; the fifth device layer 705 is preferably constructed with a film material and defines five outlet ports 718A-718E, corresponding to the five branch channels 708-712. When the device 700 is assembled, the inlet channel portions 707A-707E are in fluid communication to form inlet channel 707.

Impedance regions 716A-716E may be any structure that tends to impede the flow of fluid through the region, including, without limitation, overlap regions (where a portion of a first channel in a first device layer overlaps a portion of a second channel in a second device layer), flow-limiting apertures, passive valves (such as ball valves, flap valves, etc.), active valves (such as needle valves, pinch valves, etc.), and/or any combination thereof.

In operation, the outlet ports 718A-718E are initially unobstructed. A sample is provided to the device 700 through the inlet port 706 and communicated through the first inlet channel 707A to fill the first branch channel 708 until the first outlet port 718A is substantially obstructed or occluded. The occlusion may be provided by placing a blockage (not shown), such as a segment of adhesive tape, or a heat sealed device layer or otherwise closing off the outlet port 718A. Alternatively, a valve (not shown) may be placed at the outlet port 718A. As pressure rises within the first branch channel, fluid flow overcomes the resistance of the corresponding impedance region 716A to flow into the inlet channel 707B to the second branch channel 709. Thereafter, fluid fills the second branch channel 709 until the corresponding outlet port 718B is obstructed. In a like fashion, fluidic samples (fractions) are communicated sequentially to the third, fourth, and fifth branch channels 710, 711, 712. When the filling process is completed, all outlet ports 718A-718E will be obstructed and all of the branch channels 708-712 will contain fluidic samples. A waste channel (not shown) may be provided to drain excess fluid from the device 700 once the filling process is complete.

Alternatively, each branch channel 708-712 may have, at its associated outlet port 718A-718E, an impedance region (not shown) that provides a higher fluidic impedance than the impedance region 716A-716E associated with that branch channel 708-712. A sample is provided to the device 700 through the inlet port 706 to fill the first branch channel 708 until the fluid reaches the impedance region (not shown) at the end of the branch channel 708. As pressure rises within the first branch channel 708, fluid flow overcomes the resistance of the corresponding impedance region 716A to flow into the second inlet channel portion 707B to the branch channel 709. Thereafter, fluid fills the second branch channel 709 until the corresponding impedance region (not shown) is reached. In a like fashion, fluidic samples (fractions) are communicated sequentially to the third, fourth, and fifth branch channels 710, 711, 712. Fraction collectors providing similar utility may be constructed in other configurations.

The impedance value of each impedance region, the volume of the branch channels, and the volume of the inlet channels may be selected so that the branch channels collect fractions of a particular periodicity. In other words, the characteristics of the structure may be selected so that, given a particular fluid flow rate, it will take a specific amount of time to fill one branch channel and trigger the cascade to the next branch channel. This approach is particularly desirable when a passive system, relying only on impedance regions to control fluid flow, is desired.

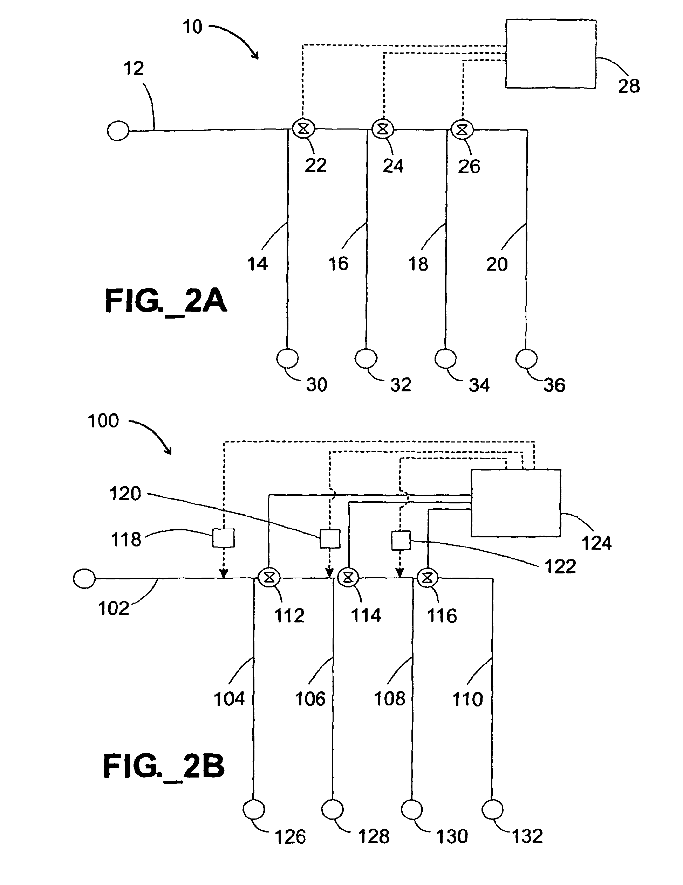

Active control systems for microfluidic fraction collectors also may be desirable. For example, as noted above, valves or tape may be used to obstruct the outlet ports 718A-718E of device 700 to selectively control fluid flow. Such active control may be performed manually or using a controller (with or without feedback), as shown in FIGS. 2A-2B.

Referring to FIG. 2A, microfluidic fraction collection system 10 includes an inlet channel 12, branch channels 14, 16, 18, a waste channel 20, valves 22, 24, 26, outlets 30, 32, 34, 36, and a controller 28. In operation, a separated sample stream is provided to the inlet channel 12. The stream initially travels through the inlet channel 12 and exits through the waste channel 20. The controller 28 selectively closes the valves 22, 24, 26 to redirect the fluid stream into the branch channels 14, 16, 18 or the waste channel 36 according to user-defined criteria. For example, the controller 28 may be a simple timer that closes the valves 22, 24, 26 in a set sequence. In this manner, the separated sample stream is divided into fractions, with each fraction then being available for analysis in its respective branch channel or in some other device, having been transferred from the branch channel thereto through the outlets 30, 32, 34.

Alternatively, as shown in FIG. 2B, a microfluidic fraction collection system 100 includes an inlet channel 102, branch channels 104, 106, 108, a waste channel 110, valves 112, 114, 116, sensors 118, 120, 122, a controller 124, and outlets 126, 128, 130, 132. Any suitable sensor may be selected to provide the desired feedback, including, but not limited to, optical, electromagnetic, mechanical, and chemical sensors. In operation, a separated sample stream is provided to inlet channel 102. The stream travels through the inlet channel 102 and exits through the waste channel 110. The controller 124 selectively operates the valves 112, 114, 116 to redirect the fluid stream into the branch channels 104-108 or the waste channel 110 in response to data concerning the fluid stream from the sensors 118, 120, 122 and uses this feedback to redirect the stream.

A separated sample stream is provided to the inlet channel 102. The sensor 118 monitors one or more characteristics of the stream. Until a desired condition is sensed by the sensor 118, the stream may be directed to a waste channel 110. When a desired condition is sensed by the sensor 118, the controller 124 closes the first valve 112, thereby directing the fluid stream containing the desired portion of the sample stream into the branch channel 104. The controller 124 then opens the first valve 112 to redirect the flow to the waste channel 110 after a set time has elapsed, the sensor 118 no longer detects the presence of the first species, the branch channel 104 is full, or any other suitable criterion. This process is repeated for the second and third branch channels 106, 108, using additional sensors 120, 122 and valves 114, 116 to control fluid flow.

Of course, any variation of the embodiments described above may be used. For example, any number of branch channels may be added to collect the desired number of species, additional flow control devices may be added to the outlets to further control the flow of fluid through the device. The controller may be a programmable general purpose computer or a controller designed specifically for the systems 10, 100. The valves or other flow restriction devices may be passive, operated manually with or without feedback (which may be visual or provided by sensors), or operated by a programmed controller with or without feedback (which may be provided manually by a user or by sensors). Moreover, any combination of valves, impedance regions, sensors, controllers, and/or feedback mechanisms may be used to provide the desired functionality. These functions may be substantially integrated into a single microfluidic device, or be executed in multiple microfluidic devices with appropriate fluid interconnects or other fluid communication means.

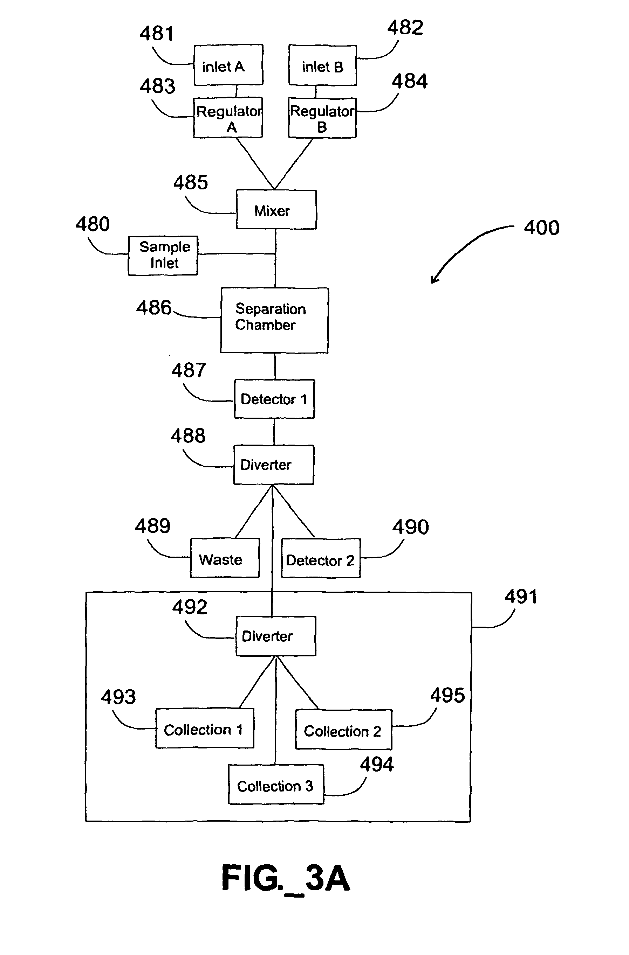

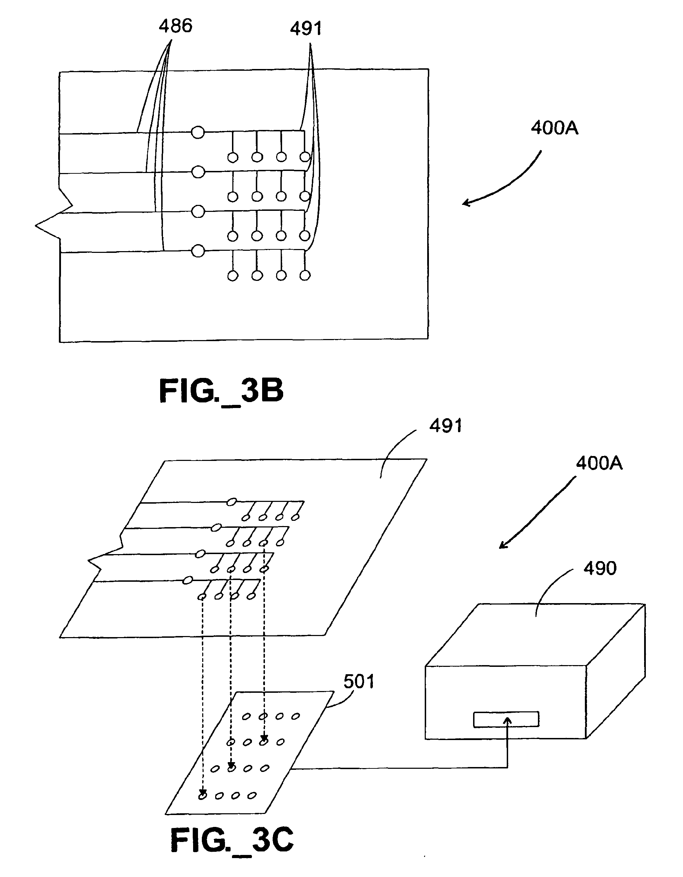

According to one embodiment of the invention, a microfluidic analytical device provides both separation and detection capabilities. A block diagram illustrating one example of such a system is provided in FIG. 3A. This block diagram shows the interconnection of various functional regions in a microfluidic system capable of executing one or moiré analytical techniques on a fluid sample. Exemplary portions 400A of the system 400 are illustrated in FIGS. 3B-3C. This flow diagram describes a general analytical technique for the current invention. As would be appreciated by one skilled in the art, variations on this theme are possible as certain individual steps may be rearranged or omitted for particular applications. The system 400 may include two inlet ports 481, 482 that provide solvent to two regulators 483, 484 that feed a mixing device region 485. Downstream of the mixer 485 is a separation chamber 486. A sample inlet port 480 delivers a sample to the system 400 between the mixer 485 and the separation chamber 486. Alternatively, a sample may be injected into the separation chamber 486. In a further alternative embodiment, sample may be injected using one of the solvent inlets 481, 482. In another embodiment, multiple solvents may be mixed "off-board," necessitating only one solvent inlet. Additional solvent inlets may be provided to increase the complexity of the solvent mixture.

The mixing region 485 effectively mixes the desired solvent(s) before the solvent(s) are provided to the separation chamber 486. The separation chamber 485 can be configured in a variety of ways, as would be recognized by one skilled in the art, to perform techniques such as ion exchange, gel filtration or size exclusion, adsorption, partition, chromatofocusing, and affinity chromatographies. In one embodiment, the separation chamber 486 is a straight channel filled with stationary phase material. The length of the filled channel may be varied as needed to perform the desired separation.

The exit of the separation chamber 486 leads to an initial flow-through detector 487. Preferably, detection is provided off the device. Alternatively, on-board detection may be provided, such as through a substantially optically transmissive layer or window. The flow-through detection scheme will typically be set up so that molecules or atoms of interest can be detected while the fluid is still flowing. Examples of flow-through technology that may be used by the detectors 487 include but are not limited to UV-visible spectroscopy, Raman spectroscopy, fluorescence detection, chemiluminescence, electrochemical detection, and other electronic detections such as capacitive and conductivity measurement.

Typically, the flow-through detector 487 will be used to pre-screen the fluid as it comes off the separation chamber 486 to determine if the given fluid contains molecules of interest for further analysis or storage. In FIG. 3A, a flow-through detector 487 leads to a diverter 488 that can direct the fluid to a waste chamber 489, a secondary detector region 490, or a fraction collector 491. Thus, the flow-through detector 487 may communicate with a controller (such as shown in FIGS. 2A-2B) via sensors or function as a sensor itself to provide data for selecting particular fractions for collection. The fraction collector 491 contains an additional diverter 492 and a number of collection chambers 493-495. Additional or fewer collection chambers may be used.

Typically, the secondary detector 490 will use a destructive detection technology such as mass spectrometry, nuclear magnetic resonance, evaporative light scattering, ion mobility spectrometry, or immobilization on material such as glycerol or porous silicon for MALDI (matrix-assisted laser desorption ionization). It may be necessary for the detector 490 to have an off-board collection mechanism such as a well plate 501 or other suitable media including, without limitation, vials, capillary tubes, hoses, etc. that lead to or can be inserted into the detector 490. Alternatively, a sampling mechanism (not shown) can be built into the microfluidic device so that the sample is directly injected into an off-board detector. For example, the outlet of the diverter 488 can lead to an open port to be used for electrospray.

In a preferred embodiment of the present invention, a parallel processing microfluidic analytical device is constructed. The term "parallel processing" as used herein refers to multiple microfluidic functional circuits on a given contiguous device wherein some or all of the functional circuits are in fluid communication with one another. In a preferred embodiment, multiple fluidic inlets are provided to a parallel processing microfluidic device. In another embodiment, multiple fluid inlets, outlets, and/or detectors are in communication with more than one microfluidic system on a given device. In these embodiments, a variety of simultaneous analytical processes may be accomplished using a small number of control inputs or outputs.

Referring to FIG. 3B, a plurality of analytical separation chambers or channels 486 are provided on a single microfluidic device. Each chamber of this plurality of separation chambers 486 connects to a one fraction collector of a plurality of fraction collectors 491, which operate as described above. In embodiments described above, any number of separation chambers and fraction collectors (each with any number of branch channels) may be added by simply increasing the number of on-board regulators, splitters, mixers, and diverters. These on-board functional regions can be built into the chip and be microfluidic in nature, if desirable in a particular application. In this manner, the number of inlet ports and off-board pumps and detectors remains constant.

While microfluidic tools and devices provided herein have been applied to perform analyses, they may also be combined and/or integrated with further tools to perform syntheses. Modular or integrated microfluidic devices having regions for performing syntheses and analyses are contemplated.

It is to be understood that the illustrations and descriptions of views of individual microfluidic tools, devices and methods provided herein are intended to disclose components that may be combined in a working device. Various arrangements and combinations of individual tools, devices, and methods provided herein are contemplated, depending on the requirements of the particular application. The particular microfluidic tools, devices, and methods illustrated and described herein are provided by way of example only, and are not intended to limit the scope of the invention.

## Claims

1. A microfluidic device (700) for sequentially collecting discrete fractions from a fluid stream, the device comprising:
• a microfluidic inlet channel (707) ;
• a plurality of microfluidic branch channels (708-712), each branch channel.(708-712) of the plurality of microfluidic branch channels (708-712) being capable of fluid communication with the microfluidic inlet channel (707); and
• a plurality of impedance regions (22, 24, 26, 112, 114, 116, 492, 716A-716E), disposed in series in the microfluidic inlet channel (707), each impedance region (22, 24, 26, 112, 114, 116, 492, 716A-716E) of the plurality of impedance regions (22, 24, 26, 112, 114, 116, 492, 716A-716E) being positioned at a junction between the inlet channel and a branch channel (708-712) of the plurality of microfluidic branch channels (708-712);
**characterized in that:**
• the device (700) further comprises a plurality of device layers (701-705) including at least one stencil layer (702, 704).

2. The microfluidic device (700) of claim 1, wherein any device layer (701-705) of the plurality of device layers (701-705) is fabricated with at least one layer of self-adhesive tape.

3. The microfluidic device (700) of claims 1 or 2, wherein any device layer (701-705) of the plurality of device layers (701-705) is fabricated with a polymeric material.

4. The microfluidic device (700) of any of the preceding claims, wherein at least one impedance region (22, 24, 26, 112, 114, 116, 492, 716A-716E) of the plurality of impedance regions (22, 24, 26, 112, 114, 116, 492, 716A-716E) includes an overlap region.

5. The microfluidic device (700) of any of the preceding claims, wherein at least one impedance region (22, 24, 26, 112, 114, 116, 492, 716A-716E) of the plurality of impedance regions (22, 24, 26, 112, 114, 116, 492, 716A-716E) includes a flow-limiting aperture.

6. The microfluidic device (700) of any of the preceding claims, wherein at least one impedance region (22, 24, 26, 112, 114, 116, 492, 716A-716E) of the plurality of impedance regions (22, 24, 26, 112, 114, 116, 492, 716A-716E) includes a passive valve.

7. The microfluidic device (700) of any of the preceding claims, wherein at least one impedance region (22, 24, 26, 112, 114, 116, 492, 716A-716E) of the plurality of impedance regions (22, 24, 26, 112, 114, 116, 492, 716A-716E) includes an active valve.

8. The microfluidic device (700) of any of the preceding claims, wherein at least one branch channel (708-712) of the plurality of branch channels (708-712) has an outlet (718A-718E), the device further comprising an outlet impedance region (718A-718E) associated with the outlet (718A-718E).

9. The microfluidic device (700) of claim 8, wherein the outlet impedance region (718A-718E) includes an overlap region.

10. The microfluidic device (700) of claim 8, wherein the outlet impedance region (718A-718E) includes a flow-limiting aperture.

11. The microfluidic device (700) of claim 8, wherein the outlet impedance region (718A-718E) includes a passive valve.

12. The microfluidic device (700) of claim 8, wherein the outlet impedance region (718A-718E) includes an active valve.

13. The microfluidic device (700) of claim 8, wherein the outlet impedance region (718A-718E) includes a substantial blockage of the outlet (718A-718E).

14. A microfluidic system (10, 100) for sequentially collecting discrete fractions from a fluid stream, the system comprising:
• the microfluidic device (700) of any of the preceding claims; and
• a controller (28, 124) in communication with the plurality of impedance regions (22, 24, 26, 112, 114, 116, 492, 716A-716E).

15. The microfluidic system (10, 100) of claim 14, further comprising a plurality of sensors (118, 120, 122), wherein each sensor (118, 120, 122) of the plurality of sensors (118, 120, 122) is in sensory communication with at least one impedance region (22, 24, 26, 112, 114, 116, 492, 716A-716E) of the plurality of impedance regions (22, 24, 26, 112, 114, 116, 492, 716A-716E) and the plurality of sensors (118, 120, 122) is in communication with the controller (28, 124).

16. A fluidic system (400) comprising:
• the microfluidic device (400A, 700) of any of the preceding claims, further comprising a plurality of microfluidic separation channels (486) for separating chemical species within a plurality of fluid streams;
• a sensor (118, 120, 122) for sensing a property of at least one fluid stream of the plurality of fluid streams;
• a controller (28, 124) in communication with the sensor (118, 120, 122) for controlling the operation of the plurality of impedance regions (22, 24, 26, 112, 114, 116, 492, 716A-716E); and
• an analytical instrument (490) for analyzing the chemical species.

17. The fluidic system (400) of claim 16, wherein the plurality of microfluidic separation channels (486) perform a separation method selected from the group consisting of: ion exchange, gel filtration, size exclusion, adsorption, partition, chromatofocusing, and affinity chromatographies.

18. The fluidic system (400) of claims 16 or 17, further comprising a flow-through detector (487) in sensory communication with the plurality of microfluidic separation channels (486).

19. The fluidic system (400) of claim 18, wherein the flow-through detector (487) performs an analysis selected from the group consisting of: UV-visible spectroscopy, Raman spectroscopy, fluorescence detection, chemiluminescence, electrochemical detection, capacitive measurement, and conductivity measurement.

20. The fluidic system (400) of claim claims 18 or 19, wherein the sensor (118, 120, 122) communicates with the flow-through detector (487).

21. The fluidic system (400) of claim 20, wherein the controller (28, 124) communicates with the flow-through detector (487).

22. The fluidic system (400) of claims 16, 17, 18, 19, 20, or 21, wherein the analytical instrument (490) performs a destructive detection method.

23. The fluidic system (400) of claims 16, 17, 18, 19, 20, 21, or 22, wherein the analytical instrument (490) performs an analysis selected from the group consisting of: mass spectrometry, nuclear magnetic resonance, evaporative light scattering, ion mobility spectrometry, and matrix-assisted laser desorption ionization.

## Revendications

1. Dispositif microfluidique (700) pour collecter séquentiellement des fractions discrètes dans un courant de fluide, le dispositif comprenant:
- un canal d'entrée microfluidique (707);
- une pluralité de canaux d'embranchement microfluidiques (708-712), chaque canal d'embranchement (708-712) de la pluralité de canaux d'embranchement microfluidiques (708-712) étant capable d'établir une communication fluidique avec le canal d'entrée microfluidique (707); et
- une pluralité de régions d'impédance (22, 24, 26, 112, 114, 116, 492, 716A-716E) disposées en série dans le canal d'entrée microfluidique (707), chaque région d'impédance (22, 24, 26, 112, 114, 116, 492, 716A-716E) de la pluralité de régions d'impédance (22, 24, 26, 112, 114, 116, 492, 716A-716E) étant positionnée à une jonction entre le canal d'entrée et un canal d'embranchement (708-712) de la pluralité de canaux d'embranchement microfluidiques (708-712);
**caractérisé en ce que**:
- le dispositif (700) comprend en outre une pluralité de couches de dispositif (701-705) comprenant au moins une couche de stencil (702, 704).

2. Dispositif microfluidique (700) selon la revendication 1, dans lequel toute couche de dispositif (701-705) de la pluralité de couches de dispositif (701-705) est fabriquée avec au moins une couche de ruban auto-adhésif.

3. Dispositif microfluidique (700) selon la revendication 1 ou 2, dans lequel toute couche de dispositif (701-705) de la pluralité de couches de dispositif (701-705) est fabriquée avec une matière polymère.

4. Dispositif microfluidique (700) selon l'une quelconque des revendications précédentes, dans lequel au moins une région d'impédance (22, 24, 26, 112, 114, 116, 492, 716A-716E) de la pluralité de régions d'impédance (22, 24, 26, 112, 114, 116, 492, 716A-716E) comprend une région de recouvrement.

5. Dispositif microfluidique (700) selon l'une quelconque des revendications précédentes, dans lequel au moins une région d'impédance (22, 24, 26, 112, 114, 116, 492, 716A-716E) de la pluralité de régions d'impédance (22, 24, 26, 112, 114, 116, 492, 716A-716E) comporte une ouverture de limitation d'écoulement.

6. Dispositif microfluidique (700) selon l'une quelconque des revendications précédentes, dans lequel au moins une région d'impédance (22, 24, 26, 112, 114, 116, 492, 716A-716E) de la pluralité de régions d'impédance (22, 24, 26, 112, 114, 116, 492, 716A-716E) comprend une soupape passive.

7. Dispositif microfluidique (700) selon l'une quelconque des revendications précédentes, dans lequel au moins une région d'impédance (22, 24, 26, 112, 114, 116, 492, 716A-716E) de la pluralité de régions d'impédance (22, 24, 26, 112, 114, 116, 492, 716A-716E) comprend une soupape active.

8. Dispositif microfluidique (700) selon l'une quelconque des revendications précédentes, dans lequel au moins un canal d'embranchement (708-712) de la pluralité de canaux d'embranchement (708-712) possède une sortie (718A-718E), le dispositif comprenant en outre une région d'impédance de sortie (718A-718E) associée à la sortie (718A-718E).

9. Dispositif microfluidique (700) selon la revendication 8, dans lequel la région d'impédance de sortie (718A-718E) comprend une région de recouvrement.

10. Dispositif microfluidique (700) selon la revendication 8, dans lequel la région d'impédance de sortie (718A-718E) comporte une ouverture de limitation d'écoulement.

11. Dispositif microfluidique (700) selon la revendication 8, dans lequel la région d'impédance de sortie (718A-718E) comprend une soupape passive.

12. Dispositif microfluidique (700) selon la revendication 8, dans lequel la région d'impédance de sortie (718A-718E) comporte une soupape active.

13. Dispositif microfluidique (700) selon la revendication 8, dans lequel la région d'impédance de sortie (718A-718E) comprend un blocage substantiel de la sortie (118A-718E).

14. Système microfluidique (10, 100) pour collecter séquentiellement des fractions discrètes dans un courant de fluide, le système comprenant:
- le dispositif microfluidique (700) selon l'une quelconque des revendications précédentes; et
- un dispositif de commande (28, 124) en communication avec la pluralité de régions d'impédance (22, 24, 26, 112, 114, 116, 492, 716A-716E).

15. Système microfluidique (10, 100) selon la revendication 14, comprenant en outre une pluralité de capteurs (118, 120, 122), dans lequel chaque capteur (118, 120, 122) de la pluralité de capteurs (118, 120, 122) est en communication de détection avec au moins une région d'impédance (22, 24, 26, 112, 114, 116, 492, 716A-716E) de la pluralité de régions d'impédance (22, 24, 26, 112, 114, 116, 492, 716A-716E), et la pluralité de capteurs (118, 120, 122) sont en communication avec le dispositif de commande (28, 124).

16. Système fluidique (400), comprenant:
- le dispositif microfluidique (400A, 700) selon l'une quelconque des revendications précédentes, comprenant en outre une pluralité de canaux de séparation microfluidiques (486) pour séparer des espèces chimiques à l'intérieur d'une pluralité de courants de fluide;
- un capteur (118, 120, 122) pour détecter une propriété d'au moins un courant de fluide de la pluralité de courants de fluide;
- un dispositif de commande (28, 124) en communication avec le capteur (118, 120, 122) pour commander le fonctionnement de la pluralité de régions d'impédance (22, 24, 26, 112, 114, 116, 492, 716A-716E); et
- un instrument analytique (490) pour analyser les espèces chimiques.

17. Système fluidique (400) selon la revendication 16, dans lequel la pluralité de canaux de séparation microfluidiques (486) exécutent un procédé de séparation sélectionné à partir du groupe comprenant les chromatographies d'échange d'ions, d'exclusion diffusion, d'exclusion de taille, d'adsorption, de partage, de chromato-focalisation et d'affinité.

18. Système fluidique (400) selon la revendication 16 ou 17, comprenant en outre un détecteur d'écoulement (487) en communication de détection avec la pluralité de canaux de séparation microfluidiques (486).

19. Système fluidique (400) selon la revendication 18, dans lequel le détecteur d'écoulement (487) exécute une analyse sélectionnée à partir du groupe comprenant: la spectroscopie UV-visible, la spectroscopie Raman, la détection par fluorescence, la chimioluminescence, la détection électrochimique, la mesure de la capacité et la mesure de la conductivité.

20. Système fluidique (400) selon la revendication 18 ou 19, dans lequel le capteur (118, 120, 122) communique avec le détecteur d'écoulement (487).

21. Système fluidique (400) selon la revendication 20, dans lequel le dispositif de commande (28, 124) communique avec le détecteur d'écoulement (487).

22. Système fluidique (400) selon la revendication 16, 17, 18, 19, 20 ou 21, dans lequel l'instrument analytique (490) exécute un procédé de détection destructif.

23. Système fluidique (400) selon la revendication 16, 17, 18, 19, 20, 21 ou 22, dans lequel l'instrument analytique (490) exécute une analyse sélectionnée dans le groupe comprenant la spectrométrie de masse, la résonance magnétique nucléaire, la diffusion de lumière par évaporation, la spectrométrie à mobilité ionique et l'ionisation par désorption laser assistée par matrice.

## Patentansprüche

1. Mikrofluid-Vorrichtung (700) zum sequentiellen Sammeln diskreter Bruchteile eines Fluid-Stroms, wobei die Vorrichtung aufweist:
• einen Mikrofluid-Einlasskanal (707);
• eine Mehrzahl von Mikrofluid-Zweigkanälen (708-712), wobei jeder Zweigkanal (708-712) der Mehrzahl von Mikrofluid-Zweigkanälen (708-712) eingerichtet ist zur Fluid-Kommunikation mit dem Mikrofluid-Einlasskanal (707); und
• eine Mehrzahl von Impedanz-Bereichen (22, 24, 26, 112, 114, 116, 492, 716A-716E), die in dem Mikrofluid-Einlasskanal (707) in Reihe angeordnet sind, wobei jeder Impedanz-Bereich (22, 24, 26, 112, 114, 116, 492, 716A-716E) der Mehrzahl von Impedanz-Bereichen (22, 24, 26, 112, 114, 116, 492, 716A-716E) an einem Übergang zwischen dem Einlasskanal und einem Zweigkanal (708-712) der Mehrzahl von Mikrofluid-Zweigkanäle (708-712) positioniert ist;
**dadurch gekennzeichnet, dass**
• die Vorrichtung (700) außerdem eine Mehrzahl von Vorrichtungsschichten (701-705) mit mindestens einer Schablonenschicht (702, 704) aufweist.

2. Mikrofluid-Vorrichtung (700) gemäß Anspruch 1, wobei jede beliebige Vorrichtungsschicht (701-705) der Mehrzahl von Vorrichtungsschichten (701-705) aus mindestens einer Schicht aus einem selbstklebenden Band hergestellt ist.

3. Mikrofluid-Vorrichtung (700) gemäß Anspruch 1 oder 2, wobei jede beliebige Vorrichtungsschicht (701-705) der Mehrzahl von Vorrichtungsschichten (701-705) aus einem Polymer-Material hergestellt ist.

4. Mikrofluid-Vorrichtung (700) gemäß irgendeinem der vorangehenden Ansprüche, wobei mindestens ein Impedanz-Bereich (22, 24, 26, 112, 114, 116, 492, 716A-716E) der Mehrzahl von Impedanz-Bereichen (22, 24, 26, 112, 114, 116, 492, 716A-716E) einen Überlapp-Bereich aufweist.

5. Mikrofluid-Vorrichtung (700) gemäß irgendeinem der vorangehenden Ansprüche, wobei mindestens ein Impedanz-Bereich (22, 24, 26, 112, 114, 116, 492, 716A-716E) der Mehrzahl von Impedanz-Bereichen (22, 24, 26, 112, 114, 116, 492, 716A-716E) eine Fluss-begrenzende Öffnung aufweist.

6. Mikrofluid-Vorrichtung (700) gemäß irgendeinem der vorangehenden Ansprüche, wobei mindestens ein Impedanz-Bereich (22, 24, 26, 112, 114, 116, 492, 716A-716E) der Mehrzahl von Impedanz-Bereichen (22, 24, 26, 112, 114, 116, 492, 716A-716E) ein passives Ventil aufweist.

7. Mikrofluid-Vorrichtung (700) gemäß irgendeinem der vorangehenden Ansprüche, wobei mindestens ein Impedanz-Bereich (22, 24, 26, 112, 114, 116, 492, 716A-716E) der Mehrzahl von Impedanz-Bereichen (22, 24, 26, 112, 114, 116, 492, 716A-716E) ein aktives Ventil aufweist.

8. Mikrofluid-Vorrichtung (700) gemäß irgendeinem der vorangehenden Ansprüche, wobei mindestens ein Zweigkanal (708-712) der Mehrzahl von Zweigkanälen (708-712) einen Auslass (718A-718E) aufweist und wobei die Vorrichtung außerdem einen mit dem Auslass (718A-718E) in Verbindung stehenden Auslass-Impedanz-Bereich (718A-718E) aufweist.

9. Mikrofluid-Vorrichtung (700) gemäß Anspruch 8, wobei der Auslass-Impedanz-Bereich (718A-718E) einen Überlapp-Bereich aufweist.

10. Mikrofluid-Vorrichtung (700) gemäß Anspruch 8, wobei der Auslass-Impedanz-Bereich (718A-718E) eine Fluss-begrenzende Öffnung aufweist.

11. Mikrofluid-Vorrichtung (700) gemäß Anspruch 8, wobei der Auslass-Impedanz-Bereich (718A-718E) ein passives Ventil aufweist.

12. Mikrofluid-Vorrichtung (700) gemäß Anspruch 8, wobei der Auslass-Impedanz-Bereich (718A-718E) ein aktives Ventil aufweist.

13. Mikrofluid-Vorrichtung (700) gemäß Anspruch 8, wobei der Auslass-Impedanz-Bereich (718A-718E) eine wesentliche Blockade des Auslasses (718A-718E) aufweist.

14. Mikrofluid-System (10, 100) zum sequentiellen Sammeln diskreter Bruchteile eines Fluid-Stroms, wobei das System aufweist:
• eine Mikrofluid-Vorrichtung (700) gemäß irgendeinem der vorangehenden Ansprüche; und
• eine mit der Mehrzahl von Impedanz-Bereichen (22, 24, 26, 112, 114, 116, 492, 716A-716E) in Verbindung stehende Steuerung (28, 124).

15. Mikrofluid-System (10, 100) gemäß Anspruch 14, außerdem aufweisend eine Mehrzahl von Sensoren (118, 120, 122), wobei jeder Sensor (118, 120, 122) der Mehrzahl von Sensoren (118, 120, 122) in sensorischer Kommunikation mit mindestens einem Impedanz-Bereich (22, 24, 26, 112, 114, 116, 492, 716A-716E) der Mehrzahl von Impedanz-Bereichen (22, 24, 26, 112, 114, 116, 492, 716A-716E) steht und wobei die Mehrzahl von Sensoren (118, 120, 122) in Kommunikation mit der Steuerung (28, 124) steht.

16. Fluid-System (400), aufweisend:
• die Mikrofluid-Vorrichtung (400A, 700) gemäß irgendeinem der vorangehenden Ansprüche, die außerdem eine Mehrzahl von Mikrofluid-Trennkanälen (486) zum Trennen chemischer Spezien innerhalb einer Mehrzahl von Fluid-Strömen aufweist;
• einen Sensor (118, 120, 122) zum Wahrnehmen einer Eigenschaft von mindestens einem Fluid-Strom der Mehrzahl von Fluid-Strömen;
• eine mit dem Sensor (118, 120, 122) in Kommunikation stehende Steuerung (28, 124) zum Steuern des Betriebs der Mehrzahl von Impedanz-Bereiche (22, 24, 26, 112, 114, 116, 492, 716A-716E); und
• ein analytisches Instrument (490) zum Analysieren der chemischen Spezien.

17. Fluid-System (400) gemäß Anspruch 16, wobei die Mehrzahl von Mikrofluid-Trennkanälen (486) ein Trennverfahren durchführen, das aus der Gruppe ausgewählt ist, welche aufweist: Ionen-Austausch, Gel-Filtrierung, Größen-Ausschluss, Adsorption, Aufteilung, Chromatofokussierung und Affinitäts-Chromatographie.

18. Fluid-System (400) gemäß Anspruch 16 oder 17, außerdem aufweisend einen in sensorischer Kommunikation mit der Mehrzahl von Mikrofluid-Trennkanälen (486) stehenden Durchfluss-Detektor (487).

19. Fluid-System (400) gemäß Anspruch 18, wobei der Durchfluss-Detektor (487) eine Analyse durchführt, die aus der Gruppe ausgewählt ist, welche aufweist: UV-sichtbare Spektroskopie, Raman-Spektroskopie, Fluoreszenz-Detektion, Chemilumineszenz, elektrochemische Detektion, Kapazitäts-Messung und Leitfähigkeits-Messung.

20. Fluid-System (400) gemäß Anspruch 18 oder 19, wobei der Sensor (118, 120, 122) mit dem Durchfluss-Detektor (487) kommuniziert.

21. Fluid-System (400) gemäß Anspruch 20, wobei die Steuerung (28, 124) mit dem Durchfluss-Detektor (487) kommuniziert.

22. Fluid-System (400) gemäß Anspruch 16, 17, 18, 19, 20 oder 21, wobei das analytische Instrument (490) ein destruktives Detektions-Verfahren durchführt.

23. Fluid-System (400) gemäß Anspruch 16, 17, 18, 19, 20, 21 oder 22, wobei das analytische Instrument (490) eine Analyse durchführt, die aus der Gruppe ausgewählt ist, welche aufweist: Massenspektrometrie, kernmagnetische Resonanz, Ionen-Mobilitäts-Spektrometrie und Matrixunterstützte Laser-Desorptions-Ionisation.
